(19) Europäisches Patentamt

European Patent Office

Office européen des brevets

(11) Veröffentlichungsnummer: **0 081 687**
**B1**

(12) **EUROPÄISCHE PATENTSCHRIFT**

(51) Int. Cl.⁴: **H 04 B 3/44, H 04 B 3/46**

(45) Veröffentlichungstag der Patentschrift:
03.07.85

(21) Anmeldenummer: **82110477.5**

(22) Anmeldetag: **12.11.82**

(54) Schalteinrichtung für Einrichtung zur Wechselstrom-Parallel-Fernspeisung.

(30) Priorität: **16.11.81 DE 3145437**

(43) Veröffentlichungstag der Anmeldung:
**22.06.83 Patentblatt 83/25**

(45) Bekanntmachung des Hinweises auf die Patenterteilung:
**03.07.85 Patentblatt 85/27**

(84) Benannte Vertragsstaaten:
**AT BE CH DE FR GB IT LI LU NL SE**

(56) Entgegenhaltungen:
**SIEMENS-ZEITSCHRIFT, Band 45, 1971, Beiheft:
Nachrichten-Übertragungstechnik E. BRAUN et al.
"Fernspeisen der TF-Unterflurverstärker von
Breitband-Kabelsystemen" Seiten 96-99
NACHRICHTENTECHNISCHE ZEITSCHRIFT, Heft 10,
1966 E. BRAUN "Überwachung und Fehlerortung für
Trägerfrequenz-Breitbandsysteme auf Leitungen"
Seiten 574-580
Patent Abstracts of Japan Band 3, Nr. 131, 31. Oktober
1979 Seite 108E148 & JP-A-54-109311
SIEMENS-ZEITSCHRIFT, Band 45, 1971, Beiheft:
Nachrichten-Übertragunstechnik E. BRAUN et al.
"Fehlerortung in TF-Kabelstrecken mit
Unterflurverstärkern" Seiten 99-102**

(73) Patentinhaber: **Siemens Aktiengesellschaft, Berlin und
München Wittelsbacherplatz 2, D-8000 München 2 (DE)**

(72) Erfinder: **Ziegler, Alfred, Dipl.-Ing., Laimer Platz 1,
D-8000 München 21 (DE)**

## Beschreibung

Die Erfindung bezieht sich auf eine wie im Oberbegriff des Patentanspruches 1 angegebene Schalteinrichtung für Einrichtungen zur Wechselstrom-Parallel-Fernspeisung.

Auf Nachrichtenübertragungsstrecken mit ferngespeisten Zwischenverstärkern bzw. Regeneratoren, im folgenden als Zwischenstelle bezeichnet, soll Vorsorge getroffen sein, dass bei einer Beschädigung des Kabels, die einen Kurzschluss oder eine Unterbrechung im Fernspeisekreis zur Folge haben kann, keine Personengefährdung an der Fehlerstelle möglich ist. Dabei ist es ausserdem vorteilhaft, wenn in einem solchen Fall das Übertragungssystem auf dem Streckenteil von der Speisestelle bis zu der unmittelbar vor dem Fehlerort befindlichen Zwischenstelle weiter in Betrieb bleibt. Das fehlerhafte Kabelfeld kann nämlich dann über das systemeigene Ortungsverfahren ermittelt werden.

Zu diesem Zweck ist es bereits bekannt (Siemens-Zeitschrift 45 (1971), Beiheft Nachrichtenübertragungstechnik, Seite 102), bei Übertragungssystemen, deren Zwischenstellen mit konstantem Gleichstrom in einer Reihenschaltung ferngespeist werden, Schaltzusätze in den Zwischenstellen vorzusehen, die bei einer Unterbrechung des Speisekreises diesen vor dem fehlerhaften Feld schliessen. Dabei liegt an der Fehlerstelle eine niedrige und daher ungefährliche Gleichspannung an. Diese dient zur Prüfung des nachfolgenden Kabelfeldes und ermöglicht die selbsttätige Aufhebung der Querverbindung des Schaltzusatzes, sobald die Unterbrechung wieder beseitigt, d.h. ein fehlerfreies Kabelfeld mit der nächstfolgenden Zwischenstelle wieder angeschlossen ist. Bei einem Kurzschluss des Speisekreises bleibt die Gleichstrom-Reihenspeisung auch ohne Schaltzusatz weiter funktionsfähig; in diesem Fall tritt auch keine Berührungsspannung am Fehlerort auf.

Ganz andere Verhältnisse liegen dagegen bei Wechselstrom-Parallelspeisung vor.

Bei der Wechselstrom-Parallelspeisung ist im Falle einer Unterbrechung des Speisekreises der Weiterbetrieb ohne Zusatzeinrichtung möglich, doch führen dann berührbare Adern an der Fehlerstelle die hohe Fernspeisespannung von z.B. 1000 V. Um eine Personengefährdung auszuschliessen, muss deshalb die Fernspeisung bei diesem Fehlerfall abgeschaltet werden. Dabei stellt sich die Frage, wie in der Speisestelle eine Leitungsunterbrechung zu erkennen ist. Bei konstantem Leistungsverbrauch der Zwischenstellen hat eine Unterbrechung je nach Lage der Fehlerstelle eine entsprechende Verringerung des Fernspeisestromes zur Folge. Bei sich änderndem Leistungsverbrauch in den Zwischenstellen kann jedoch die Fehlererkennung von seiten der Fernspeisung problematisch werden. Es müsste dann jede Ausfallmeldung auf der Übertragungsseite — selbst wenn der Fehler nicht im Fernspeiseweg liegt — zur Abschaltung der Fernspeisung herangezogen werden. Dabei stellt sich als weiteres Problem die Frage, wie das fehlerhafte Feld geortet werden soll, wenn die Fernspeisung aus Personenschutzgründen abgeschaltet bleiben muss.

Überlegungen im Rahmen der Erfindung haben ergeben, dass es vorteilhaft ist, wenn die Spannungsfreischaltung der Fehlerstelle nicht in der Speisestelle, sondern in der vor dem Fehlerort befindlichen Zwischenstelle erfolgt und dass es vorteilhaft für die Fehlerortung ist, wenn auch bei einem Kurzschluss im Fernspeisekreis anstelle des gesamten Fernspeisekreises nur das fehlerhafte Kabelfeld abgeschaltet wird.

Aufgabe der Erfindung ist es daher, eine Schalteinrichtung zu schaffen, die bei Wechselstrom-Parallelspeisung im Falle eines Streckenfehlers einen ungefährlichen Weiterbetrieb ermöglicht.

Gemäss der Erfindung wird die Schaltvorrichtung in der im kennzeichnenden Teil des Patentanspruches 1 angegebenen Weise ausgebildet. Vorzugsweise wird in jeder Zwischenstelle eine derartige Schalteinrichtung vorgesehen.

Durch diese Massnahmen ergibt sich in vorteilhafter Weise eine Schaltvorrichtung, die selbsttätig in jedem Fehlerfall eine Personengefährdung vermeidet und zugleich in allen Betriebsfällen einen Weiterbetrieb der Fernspeisung in grösstmöglichem Umfange gewährleistet. Von besonderem Vorteil ist ferner, dass auch bei Verbrauchern mit relativ stark veränderlicher Leistungsaufnahme, insbesondere bei Speisung von Zwischenstellen einer Lichtwellenleiter-Nachrichtenübertragungsstrecke mit durch Peltier-Elemente gekühlten Laser-Dioden, ein sicherer Betrieb der Fernspeisung gewährleistet ist.

Vorteilhafte weitere Ausgestaltungen der Erfindung ergeben sich aus den Unteransprüchen.

Die Erfindung wird anhand der in den Figuren dargestellten Ausführungsbeispiele näher erläutert.

Es zeigen:

Fig. 1 den prinzipiellen Aufbau einer Einrichtung zur Wechselstrom-Parallel-Fernspeisung,

Fig. 2 die Einfügung einer Schaltvorrichtung in eine Einrichtung nach Fig. 1 und

Fig. 3 eine Schaltvorrichtung nach der Erfindung.

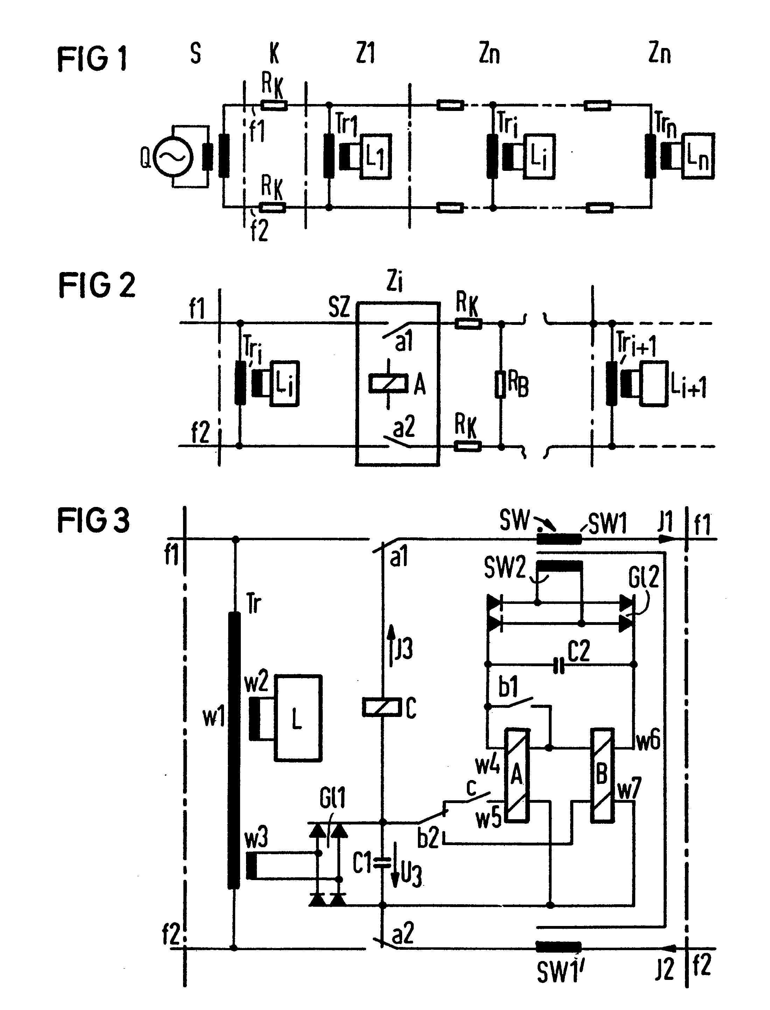

Bei der Einrichtung nach Fig. 1 werden mehrere Zwischenstellen Z1, Zi, Zn einer Einrichtung der Nachrichtenübertragungstechnik aus einer Wechselspannungsquelle Q gespeist. Die Fernspeisestrompfade f1, f2 sind über einen in der Speisestelle S vorgesehenen Transformator an die Wechselspannungsquelle Q angeschlossen.

In jeder Zwischenstelle ist jeweils an die Fernspeisestrompfade f1 und f2 ein Transformator Tr1, Tri, Trn galvanisch angeschlossen, dessen Sekundärwicklung die Last L1, Li, Ln speist. Zwischen den Transformatoren liegen die einzelnen Abschnitte der Fernspeisestrecke. Die Kupferwiderstände des Kabels sind mit $R_K$ bezeichnet.

Die Einrichtung zur Wechselstrom-Parallel-Fernspeisung kann in bekannter Weise abgewandelt werden. Insbesondere kann in den Zwischenstellen Z1, Zi, Zn das weiterführende Kabelfeld K jeweils anstatt unmittelbar an das vorangehende Kabelfeld zwecks Ausgleichs von Spannungsabfällen an eine Aufspannwicklung des Transformators angeschlossen werden.

Fig. 2 zeigt die Einfügung einer Schaltvorrichtung in einer Zwischenstelle Zi. Die Schaltvorrichtung SZ enthält ein Relais A, dessen Kontakte a1 und a2 in die Fernspeisestrompfade f1 und f2 eingefügt sind. Mit Hilfe des Relais A soll sich das nachfolgende Kabelfeld im Fehlerfalle abschalten lassen.

Die Schaltvorrichtung SZ soll die folgenden Eigenschaften aufweisen.

1. Bei Kurzschluss oder Unterbrechung auf der Strecke:

Abtrennen des fehlerhaften Kabelfeldes.

2. Bei fehlerfreier Strecke:

Prüfung des nachfolgenden Kabelfeldes. Anschalten des Kabels nur dann, wenn das folgende Feld nicht unterbrochen ist und wenn es keinen Eingangswiderstand aufweist, der ein Berührungswiderstand zwischen freiliegenden Adern sein könnte, z.B. R = 2 kΩ. Hierbei tritt aber die Schwierigkeit auf, dass eine Prüfung des Wechselstrom-Widerstandes des folgenden Feldes auch im fehlerfreien Zustand etwa den gleichen Wert ergeben kann, der einem Berührungswiderstand RB entspricht, z.B. Fernspeise-Spannung 1000 V, Last: 500 W.

Fig. 3 zeigt ein Ausführungsbeispiel für eine Schalteinrichtung für mit Wechselstrom gespeiste Zwischenstellen, die alle obengenannten Eigenschaften aufweist.

Die Prüfung des folgenden Feldes auf betriebsfähigen Zustand lässt sich dabei trotz der genannten Schwierigkeiten dadurch ohne Personengefährdung durchführen, dass diese mit einer niedrigen Gleichspannung erfolgt, da dann nur die Kupferwiderstände des Kabels und des nächstfolgenden Transformators wirksam sind, deren Summenwert in der Grösse von z.B. 100 Ω deutlich unter dem Berührungswiderstand von z.B. 2 kΩ liegt.

Bei der in Fig. 3 gezeigten Schaltvorrichtung ist der Transformator Tr mit seiner Primärwicklung w1 galvanisch an die ankommenden Fernspeisestrompfade f1, f2 angeschlossen. An der Sekundärwicklung w2 liegt die Last L. An der weiteren Wicklung w3 liegt die Gleichrichterschaltung Gl1, an die der Kondensator C1 angeschlossen ist. Die am Kondensator C1 liegende Gleichspannung U3 beträgt z.B. 40 V.

In Serie zum Kondensator C1 ist das Relais C angeordnet. Die Schaltvorrichtung SZ der Zwischenstelle Zi enthält ferner die Relais A und B. Das Relais A hat zwei Umschaltekontakte a1 und a2, deren Scheitel mit der weiterführenden Seite der Fernspeisestrompfade verbunden ist. Die Umschaltekontakte a1 und a2 legen die weiterführenden Seiten der Fernspeisestrompfade f1 und f2 wahlweise an die ankommenden Seiten der Fernspeisestrompfade f1 und f2 einerseits und die aus dem Relais C und dem Kondensator C1 bestehende Serienschaltung andererseits.

In die weiterführenden Fernspeisestrompfade f1 und f2 ist jeweils eine Primärwicklung SW1 bzw. SW1′ des Stromwandlers SW eingefügt. Der Wicklungssinn ist dabei so gewählt, dass sich die Durchflutungen summieren.

An die Sekundärwicklung SW2 des Stromwandlers SW ist die Gleichrichterschaltung Gl2 angeschlossen. Am Ausgang der Gleichrichterschaltung Gl2 liegt der Kondensator C2. An den Kondensator C2 ist eine Serienschaltung aus der ersten Wicklung w4 des Relais A und der ersten Wicklung w6 des Relais B angeschlossen. Der Umschaltkontakt b2 des Relais B legt den Kondensator C1 wahlweise an die zweite Wicklung w5 des Relais A oder an die zweite Wicklung w7 des Relais B. Ausserdem ist in Serie zur zweiten Wicklung w5 des Relais A der Arbeitskontakt c des Relais C und parallel zur ersten Wicklung w4 des Relais A der Arbeitskontakt b1 des Relais B angeordnet.

Zur An- bzw. Abschaltung des folgenden Feldes dient das Relais A, das vorzugsweise ein Starkstrom-Schütz ist. Im Ruhezustand ist das folgende Feld von der Speisespannung abgetrennt und an eine Gleichspannungsquelle mit z.B. 40 V geschaltet. Das in Reihe zur Gleichspannungsquelle liegendes Relais C prüft, ob der Gleichstromwiderstand des folgenden Feldes seinen Sollwert besitzt. Bei fehlerfreiem Feld wird das Relais C vom Prüfstrom $J = \dfrac{U}{\Sigma R}$ erregt und veranlasst über den Kontakt c das Ansprechen des Relais A über die Hilfswicklung w5. Mit dem so eingeschalteten Fernspeisestrom J1, J2 — bei ungestörtem Betrieb sind die Werte der Ströme J1 und J2 gleich gross — hält sich dieses über den Messstromwandler SW mit Wicklung w4 selbst. Seine Umschaltekontakte a1, a2 trennen gleichzeitig die als Prüfspannung dienende Gleichspannung von den Fernspeisestrompfaden f1, f2 zweipolig ab.

Auf diese Weise läuft bei einer Fernspeiseeinrichtung mit mehreren ferngespeisten Zwischenstellen der Einschaltevorgang entlang der gesamten Strecke bei Inbetriebnahme der Fernspeisung ab.

Im Falle einer Unterbrechung des folgenden Feldes fliessen nur noch kapazitive Ströme, d.h. der Fernspeisestrom wird sehr klein, bzw. zu Null, wodurch das Relais A abfällt und mit seinen Umschaltekontakten a1, a2 das fehlerhafte Feld von der Fernspeisespannung freischaltet und an die Prüfgleichspannung legt.

Im Falle eines Kurzschlusses im folgenden Feld steigt der Fernspeisestrom deutlich über seinen Nennwert an. Dies bewirkt ein Ansprechen des Überstrom-Relais B. Dieses veranlasst über den Kontakt b1 das Abfallen des Haupt-Relais A, so dass sich eine Streckenabtrennung ergibt. Über den Umschaltekontakt b2 hält es sich an der Gleich- bzw. Hilfsspannung über die Wicklung w7 selbst, wobei gleichzeitig die Hilfsspannung für die Wicklung w5 des Relais A, abgeschaltet wird. Somit erfolgt kein Anschalten auf den Kurzschluss, obwohl Relais C auch auf einen Kurzschluss anspricht.

In diesem Fall wird nach Beseitigung des Kurzschlusses zweckmässigerweise die Blockierung des Relais B nach Aus- und Wiedereinschalten der Fernspeisespannung in der Speisestelle S gelöst.

Die Überwachung des Fernspeisekreises in dieser Form ist in vorteilhafter Weise eigensicher, d.h. jeder Fehler in der Wicklung des Relais A veranlasst die sofortige Abtrennung des folgenden Speiseabschnittes. Ein Ausfall der Hilfsspannung macht jeden Einschaltvorgang unmöglich. Eine Personengefährdung durch Fehler in der Schaltvorrichtung ist somit ebenfalls ausgeschlossen.

Die bei dem Ausführungsbeispiel nach Fig. 3 verwendeten Relais, insbesondere die Relais B und C, sowie die Ansteuerung des Relais A können vorteilhaft durch entsprechende elektronische Schaltungen, vorzugsweise durch elektronische Schwellwertschalter, ersetzt werden. Die Selbsthaltung kann dabei vorzugsweise mit Hilfe eines Flip-Flops realisiert werden.

## Patentansprüche

1. Schalteinrichtung (SZ) zum selbsttätigen Abschalten eines fehlerhaften und Anschalten eines fehlerfreien Abschnittes einer Fernspeisestrecke, für aus einer Wechselspannungsquelle (Q) gespeiste Einrichtungen zur Wechselstrom-Parallel-Fernspeisung, insbesondere für Nachrichtenübertragungsstrecken mit ferngespeisten Zwischenstellen, dadurch gekennzeichnet, dass die Schalteinrichtung (SZ) Schalter (Umschalter a1, a2) zum Auftrennen der Fernspeisestrompfade (f1, f2) und zum Anschalten einer Gleichspannungsquelle (GI1, C1) an den der Wechselspannungsquelle (Q) abgewandten Abschnitt der Fernspeisestrecke enthält und dass die Schalter (a1,a2) durch den von der Gleichspannungsquelle (GI1, C1) abgegebenen Gleichstrom (J3) und durch die in den Fernspeisestrompfaden (f1, f2) fliessenden Wechselströme (J1, J2) derart steuerbar sind, dass im stromfreien Zustand die Fernspeisestrompfade (f1, f2) unterbrochen und die Gleichspannungsquelle (GI1, C1) angeschaltet sind, bei einem in einem vorgegebenen Bereich liegenden Gleichstrom (J3) die Speisestrompfade (f1, f2) durchverbunden und die Gleichspannungsquelle (GI1, C1) von den Fernspeisestrompfaden (f1, f2) abgetrennt werden und bei ausserhalb eines vorgegebenen Bereiches liegenden Wechselströmen (J1, J2) die Fernspeisestrompfade (f1, f2) unterbrochen und die Gleichspannungsquelle (GI1, C1) angeschaltet werden.

2. Schalteinrichtung nach Anspruch 1, dadurch gekennzeichnet, dass die Fernspeisestrompfade (f1, f2) des der Wechselspannungsquelle (Q) abgewandten Abschnittes mit Hilfe von Umschaltern (a1, a2) wahlweise an den der Wechselspannungsquelle (Q) zugewandten Abschnitt der Fernspeise-Strecke oder an eine die Gleichspannungsquelle (GI1, C1) und einen Gleichstrom-Schwellwertschalter (Relais C) enthaltende Serienschaltung anschaltbar sind.

3. Schalteinrichtung nach Anspruch 1 oder 2, dadurch gekennzeichnet, dass im abschaltbaren Abschnitt der Fernspeisestrecke in die Fernspeisestrompfade (f1, f2) ein Stromwandler (SW) eingefügt ist und dass an den Stromwandler (SW) wenigstens ein Schwellwertschalter (Relais A, B) angeschlossen ist.

4. Schalteinrichtung nach Anspruch 2 oder 3, dadurch gekennzeichnet, dass zur wechselstromabhängigen Steuerung der Umschalter (a1, a2) ein auf Unterstrom und ein auf Überstrom ansprechender Schwellwertschalter (Relais A, B) vorgesehen sind.

5. Schalteinrichtung nach Anspruch 4, dadurch gekennzeichnet, dass der auf Unterstrom ansprechende Schwellwertschalter durch ein erstes mit zwei Wicklungen (w4, w5) versehenes Relais (A) gebildet ist, dessen erste Wicklung (w4) mit dem vom Wechselstrom (J1, J2) abgeleiteten Messstrom (Stromwandler SW) beaufschlagbar ist und dessen zweite Wicklung (w5) mittels des Gleichstrom-Schwellwertschalters (Relais C) bei intakter Speisestrecke an die Gleichspannungsquelle (GI1, C1) anschliessbar ist und dass die Umschalter (a1, a2) Kontakte des ersten Relais (A) sind.

6. Schalteinrichtung nach Anspruch 5, dadurch gekennzeichnet, dass der auf Überstrom ansprechende Schwellwertschalter durch ein zweites, mit zwei Wicklungen (w6, w7) versehenes Relais (B) gebildet ist, dessen erste Wicklung (w6) mit dem vom Wechselstrom (J1, J2) abgeleiteten Messstrom (Stromwandler SW) beaufschlagbar und dessen zweite Wicklung (w7) mit einem Kontakt des zweiten Relais (B) an die Gleichspannungsquelle (GI1, C1) anschaltbar ist.

7. Schalteinrichtung nach Anspruch 6, dadurch gekennzeichnet, dass das zweite Relais (B) einen Umschaltekontakt (b2) aufweist, der bei erregtem Relais (B) die Gleichspannung (U3) an die zweite Wicklung (w7) des zweiten Relais (B) legt und bei nicht erregtem zweiten Relais (B) die Gleichspannung (U3) über einen Arbeitskontakt (c) eines den Gleichstrom-Schwellwertschalter bildenden dritten Relais (C) an die zweite Wicklung (w5) des ersten Relais (A) legt.

8. Schalteinrichtung nach einem der Ansprüche 1 bis 7, dadurch gekennzeichnet, dass die Gleichspannungsquelle (GI1, C1) eine mit der Wechselspannung ferngespeiste Hilfsspannungsquelle ist.

9. Schalteinrichtung nach einem der vorhergehenden Ansprüche, dadurch gekennzeichnet, dass die Überstrom-Schwellwertschalter in Abhängigkeit von der Zahl der nachfolgenden Kabelfelder, insbesondere bezüglich der Ansprechverzögerung, einstellbar sind derart, dass die unmittelbar vor einem Kurzschluss liegende Schaltvorrichtung zuerst anspricht.

## Claims

1. A switch arrangement (SZ) for automatically disconnecting a faulty section of a remote-feed path and connecting a fault-free section, for devices remotely fed in parallel from an a.c. voltage source (Q), in particular for communications transmission links with remote-fed intermediate stations, *characterized in that* the switching arrangement (SZ) contains switches (change-over switches a1, a2) which serve to cut off the remote-feed current paths (f1, f2) and to connect a d.c. voltage source (Gl1, C1) to that section of the remote-feed section remote from the a.c. voltage source (Q) and that the switches (a1, a2) can be controlled by the d.c. (J3) emitted from the d.c. voltage source (Gl1, C1) and by the alternating currents (J1, J2) flowing in the remote-feed current paths (f1, f2) in such manner that in the current-free state the remote-feed current paths (f1, f2) are interrupted and the d.c. voltage source (Gl1, C1) is connected, in the case of a direct current (J3) occurring within a given range the feed current paths (f1, f2) are connected and the d.c. voltage source (Gl1, C1) is cut off from the remote-feed current paths (f1, f2), and in the event of alternating currents (J1, J2) outside of a given range occurring the remote-feed current paths (f1, f2) are interrupted and the d.c. voltage source (Gl1, C1) is connected.

2. A switch arrangement as claimed in Claim 1, *characterized in that* the remote-feed current paths (f1, f2) of that section remote from the a.c. voltage source (Q) can be selectively connected with the assistance of change-over switches (a1, a2) to that section of the remote-feed path adjacent the a.c. voltage source (Q) or to a series circuit which contains the d.c. voltage source (Gl1, C1) and a d.c. threshold value switch (relay C).

3. A switch arrangement as claimed in Claim 1 or 2, *characterized in that* a current converter (SW) is interposed into the remote-feed current paths (f1, f2) in that section of the remote-feed path which can be disconnected, and that at least one threshold value switch (relays A, B) is connected to the current converter (SW).

4. A switch arrangement as claimed in Claim 2 or 3, *characterized in that* for the a.c. dependent control of the change-over switches (a1, a2), a threshold value switch which responds to over-current and a threshold value switch which responds to under-current (relays A, B) are provided.

5. A switch arrangement as claimed in Claim 4, *characterized in that* the threshold value switch which responds to under-current is formed by a first relay (A) provided with two windings (w4, w5), whose first winding (w4) can be acted upon by the measuring current derived from the alternating current (J1, J2) (current converter SW) and whose second winding (w5) can be connected by means of the d.c. threshold value switch (relay C) to the d.c. voltage source (Gl1, C1) when the feed path is intact, and that the change-over switches (a1, a2) are contacts of the first relay (A).

6. A switch arrangement as claimed in Claim 5, *characterized in that* the threshold value switch which responds to the over-current is formed by a second relay (B) provided with two windings (w6, w7), whose first winding (w6) can be acted upon by the measuring current derived from the alternating current (J1, J2) (current converter SW), and whose second winding (w7) can be connected by a contact of the second relay (B) to the d.c. voltage source (Gl1, C1).

7. A switch arrangement as claimed in Claim 6, *characterized in that* the second relay (B) has a make-and-break contact (b2) which connects the d.c. voltage (U3) to the second winding (w7) of the second relay (B) when the relay (B) is excited, and connects the d.c. voltage (U3) via a make contact (c) of a third relay (C) (which forms the d.c. threshold value switch) to the second winding (w5) of the first relay (A) when the second relay (B) is not excited.

8. A switch arrangement as claimed in one of Claims 1 to 7, *characterized in that* the d.c. voltage source (Gl1, C1) is an auxiliary voltage source remote-fed by the alternating voltage.

9. A switch arrangement as claimed in one of the preceding Claims, *characterized in that* the over-current threshold value switches can be set in dependence upon the number of following cable fields, in particular in respect of the response delay, in such manner that the switching device located directly prior to a short-circuit is the first to respond.

**Revendications**

1. Dispositif de commutation (SZ) pour la mise automatique hors circuit d'un tronçon défectueux d'un parcours d'alimentation à distance, et la mise en circuit d'un tronçon correct, pour des dispositifs alimentés à partir d'une source (Q) de tension alternative pour la téléalimentation parallèle en courant alternatif, en particulier pour des voies de transmission d'informations avec des stations intermédiaires alimentées à distance, caractérisé en ce que le dispositif de commutation (SZ) contient un interrupteur (inverseur $a_1$, $a_2$) pour la séparation des trajets ($f_1$, $f_2$) du courant d'alimentation à distance et pour la mise en circuit d'une source à tension continue (Gl1, C1) sur le tronçon du parcours d'alimentation à distance opposé à la source de tension alternative (Q), et en ce que les interrupteurs ($a_1$, $a_2$) peuvent, par le courant continu (J3) livré par la source de tension continue (Gl1, C1) et par les courants alternatifs (J1, J2) s'écoulant dans les trajets ($f_1$, $f_2$) du courant d'alimentation à distance, être commandés de telle façon que, dans l'état d'absence de courant, les trajets ($f_1$, $f_2$) de courant d'alimentation à distance sont interrompus et raccordés à la source de tension continue (Gl1, C1), avec un courant continu (J3) se situant dans un domaine prédéfini, les trajets ($f_1$, $f_2$) de courant d'alimentation étant reliés entre eux et la source de tension continue (Gl1, C1) séparés des trajets ($f_1$, $f_2$) de courant d'alimentation à distance, et avec des courants alternatifs ($J_1$, $J_2$) se situant en dehors d'un domaine prédéfini, les trajets ($f_1$, $f_2$) de courant d'alimentation à distance étant interrompus et raccordés à la source de tension continue (Gl1, C1).

2. Dispositif de commutation selon la revendication 1, caractérisé en ce que les trajets ($f_1$, $f_2$) de courant d'alimentation à distance du tronçon opposé à la source (Q) de tension alternative, peuvent, avec l'aide d'inverseurs ($a_1$, $a_2$) être, au choix,

connectés au tronçon du parcours d'alimentation à distance tourné vers la source (Q) de tension alternative, ou à un montage série contenant la source de tension continue (GI1, C1) et un commutateur électronique à seuil en courant continu (relais C).

3. Dispositif de commutation selon la revendication 1 ou 2, caractérisé en ce que, dans le tronçon déconnectable du parcours d'alimentation à distance, est inséré, dans les trajets ($f_1$, $f_2$) de courant d'alimentation à distance, un transformateur d'intensité (SW), et en ce qu'au transformateur d'intensité (SW) est raccordé au moins un commutateur électronique à seuil (relais A, B).

4. Dispositif de commutation selon la revendication 2 ou 3, caractérisé en ce que pour la commande des inverseurs ($a_1$, $a_2$) dépendante du courant alternatif, sont prévus un commutateur électronique à seuil répondant à une sous-intensité de courant, et un autre répondant à une surintensité (relais A, B).

5. Dispositif de commutation selon la revendication 4, caractérisé en ce que le commutateur électronique à seuil répondant à une sous-intensité est formé par un premier relais (A) doté de deux enroulements (W4, W5), dont le premier enroulement (W4) peut être alimenté avec le courant de mesure (transformateur d'intensité SW) dérivé du courant alternatif ($J_1$, $J_2$) et dont le second enroulement (W5) peut être raccordé à la source de tension continue (GI1, C1) avec un parcours intact d'alimentation au moyen du commutateur électronique à seuil en courant continu (relais C) et en ce que les inverseurs ($a_1$, $a_2$) sont des contacts du premier relais (A).

6. Dispositif de commutation selon la revendication 5, caractérisé en ce que le commutateur électronique à seuil répondant à une surintensité est formé par un second relais (B) doté de deux enroulements (w6, w7), dont le premier enroulement (w6) peut être alimenté par le courant de mesure (transformateur d'intensité SW) dérivé du courant alternatif ($J_1$, $J_2$), et dont le second enroulement (w7) peut être raccordé à la source de tension continue (GI1, C1) avec un contact du second relais (B).

7. Dispositif de commutation selon la revendication 6, caractérisé en ce que le second relais (B) présente un contact inverseur (b2) qui, avec le relais (B) excité, place la tension continue (U3) aux bornes du second enroulement (w7) et du second relais (B) et, avec un second relais (B) non excité, place la tension continue (U3), par l'intermédiaire d'un contact de travail (c) d'un troisième relais (C) formant le commutateur électronique à seuil en courant continu, aux bornes du second enroulement (w5) du premier relais (A).

8. Dispositif de commutation selon l'une des revendications 1 à 7, caractérisé en ce que la source de tension continue (GI1, C1) est une source de tension auxiliaire alimentée à distance par la tension alternative.

9. Dispositif de commutation selon l'une des précédentes revendications, caractérisé en ce que les commutateurs électroniques à seuil pour surintensité sont réglables en fonction du nombre de zones suivantes de câble, en particulier en ce qui concerne le retard de réponse, de sorte que le dispositif de commutation se trouvant immédiatement avant un court-circuit réagit en premier.

FIG 1

FIG 2

FIG 3